# EUROPEAN PATENT APPLICATION

(11) **EP 3 103 652 A1**
(43) Date of publication of application: **14.12.2016**
(21) Application number: 16173510.5
(22) Date of filing: 08.06.2016
(51) Int. Cl.: B60B 3/00, B60B 3/02, B60B 3/10, B60B 21/02, B60B 3/04, B60B 3/08, B60B 7/00

(54) **VEHICLE WHEEL**

(30) Priority: 11.06.2015 JP 2015118248
(71) Applicant: Central Motor Wheel Co., Ltd., Anjo-shi Aichi 446-0004 (JP)
(72) Inventor: IMAI, Hirosuke, Anjo-shi, Aichi 446-0004 (JP); YAMANO, Hiroyuki, Anjo-shi, Aichi 446-0004 (JP); KATAOKA, Naoto, Anjo-shi, Aichi 446-0004 (JP); AMANO, Takanori, Anjo-shi, Aichi 446-0004 (JP); KONDO, Tetsushi, Anjo-shi, Aichi 446-0004 (JP); TAKEUCHI, Shinji, Anjo-shi, Aichi 446-0004 (JP)
(74) Representative: Winter, Brandl, Fürniss, Hübner, Röss, Kaiser, Polte - Partnerschaft mbB

(57) **Abstract**

A vehicle wheel (101) includes a wheel rim portion (102); a hub portion (104); a plurality of spoke portions (105) extending radially from the hub portion (104) to the wheel rim portion (102) and connected to the wheel rim portion (102); and one or more extending portions each of which is configured to partially cover an opening portion provided between two adjacent spoke portions (105) among the plurality of spoke portions (105), and to extend from the wheel rim portion (102) toward the hub portion (104) without contacting any of the hub portion (104) and the plurality of spoke portions (105), the one or more extending portions having a thickness that is smaller than a thickness of each of the plurality of spoke portions (105) in a cylindrical axis direction of the wheel rim portion (102).

## Description

### BACKGROUND OF THE INVENTION

### 1. Field of the Invention

The present invention relates to a vehicle wheel to which a tire is attached.

### 2. Description of Related Art

An example of this kind of vehicle wheel (hereinafter, may be simply referred to as "wheel") is disclosed in each of Japanese Patent Application Publication No. 2003-048403 (JP 2003-048403 A) and EP Application Publication No. 2208621. In JP 2003-048403 A, a wheel cover, which is formed separately from the wheel, is attached to the wheel. The wheel cover includes an annular guide surface provided on the side of an outer periphery of the wheel. This cover shape is employed to ensure brake cooling performance, and to improve aerodynamic characteristics of a vehicle by adjusting a flow of air and decreasing air resistance acting on the vehicle when the vehicle is traveling. In EP Application Publication No. 2208621, the wheel includes an annular thin plate portion that is provided on an outer peripheral portion of a wheel disc and is connected to a rim portion and spoke portions. The thin plate portion is configured to partially cover opening portions each of which is formed between two spoke portions adjacent to each other. In the wheel, the thin plate portion integrated with the wheel adjusts a flow of air around the thin plate portion such that air resistance acting on a vehicle is decreased when the vehicle is traveling and thus aerodynamic characteristics of the vehicle is improved.

Such a vehicle wheel is configured as a strength member that transmits a load between an axle hub of a vehicle and a tire. In other words, when the vehicle is traveling, the load is transmitted among a hub portion connected to the axle hub, a rim portion attached to the tire, and spoke portions (i.e., a disc portion) that connect the hub portion and the rim portion in the wheel, and thus, stress occurs in an inner portion of the wheel. In a case where a wheel includes a thin plate portion integrated with the wheel and the thin plate portion is connected to a rim portion and spoke portions as in the case of the wheel disclosed in EP Application Publication No. 2208621, stress occurs in the thin plate portion when the vehicle is traveling. Thus, a thickness of the thin plate portion is set so as to ensure strength required of the wheel, taking into account the stress that occurs in the thin plate portion. Accordingly, in the case of the wheel including the above-described thin plate portion, the thickness of the thin plate portion cannot be sufficiently decreased, and thus, an increase in weight caused by providing the thin plate portion may be increased. As a result, the weight of the entire wheel may be increased.

### SUMMARY OF THE INVENTION

The invention provides a technique that is effective for suppressing an increase in weight of a vehicle wheel and adjusting a flow of air in the vehicle wheel when a vehicle is traveling.

A vehicle wheel according to an aspect of the invention includes a wheel rim portion having a cylindrical shape; a hub portion configured to be attached to an axle hub of a vehicle; a plurality of spoke portions extending radially from the hub portion to the wheel rim portion and connected to the wheel rim portion; and one or more extending portions. Each of the one or more extending portions is configured to partially cover an opening portion provided between two adjacent spoke portions among the plurality of spoke portions, and to extend from the wheel rim portion toward the hub portion without contacting any of the hub portion and the plurality of spoke portions, the one or more extending portions having a thickness that is smaller than a thickness of each of the plurality of spoke portions in a cylindrical axis direction of the wheel rim portion.

In the vehicle wheel having the above-described configuration, each of the one or more extending portions partially restricts a flow of air toward a vehicle inner side or a vehicle outer side through the opening portion. In addition, each of the one or more extending portions adjusts a flow of air on a surface of the extending portion. Thus, the aerodynamic characteristics of the vehicle can be improved. Further, in the above-described configuration, since each of the one or more extending portions is not connected to any of the hub portion and the plurality of spoke portions, even if a load is applied to the wheel when the vehicle is traveling, the load is unlikely to be applied to the one or more extending portions. Accordingly, it is possible to increase flexibility in design of the shape (plate thickness, orientation, size, and the like) of each of the one or more extending portions. As a result, the weight of each of the one or more extending portions can be reduced by reducing the plate thickness of the extending portion. This makes it possible to suppress an increase in the weight of the wheel. As described above, each of the one or more extending portions adjusts the flow of air toward the vehicle inner side or the vehicle outer side through the opening portion, and the flow of air on the surface of the extending portion, and thus, the aerodynamic characteristics of the vehicle can be improved. In this regard, since the flexibility in the design of each of the one or more extending portions is increased, the extending portion can be easily configured to have a shape that makes it possible to achieve desired aerodynamic characteristics of the vehicle and desired brake cooling performance. Thus, it is possible to provide the vehicle wheel that is effective for suppressing an increase in the wheel weight and adjusting the flow of air when the vehicle is traveling.

In the vehicle wheel according to the above-aspect of the invention, each of the one or more extending portions may extend from the wheel rim portion toward the hub portion without protruding beyond a vehicle outer side surface of each of the plurality of spoke portions in the cylindrical axis direction. With this configuration, it is possible to suppress contact (i.e., to reduce the possibility of contact) between each of the one or more extending portions of the wheel and an obstacle positioned outside the wheel (for example, a curb provided at a road shoulder as a boundary line between a roadway and a sidewalk or a safety zone).

Thus, according to the above-described aspect of the invention, it is possible to suppress an increase in the weight of the vehicle wheel and to adjust the flow of air in the vehicle wheel when the vehicle is traveling.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view of a vehicle wheel according to an embodiment of the invention seen from a vehicle outer side;
FIG. 2 is a view illustrating a sectional structure of the vehicle wheel taken along a line II-II in FIG. 1; and
FIG. 3 is an enlarged view of a B region in FIG. 1.

### DETAILED DESCRIPTION OF EMBODIMENTS

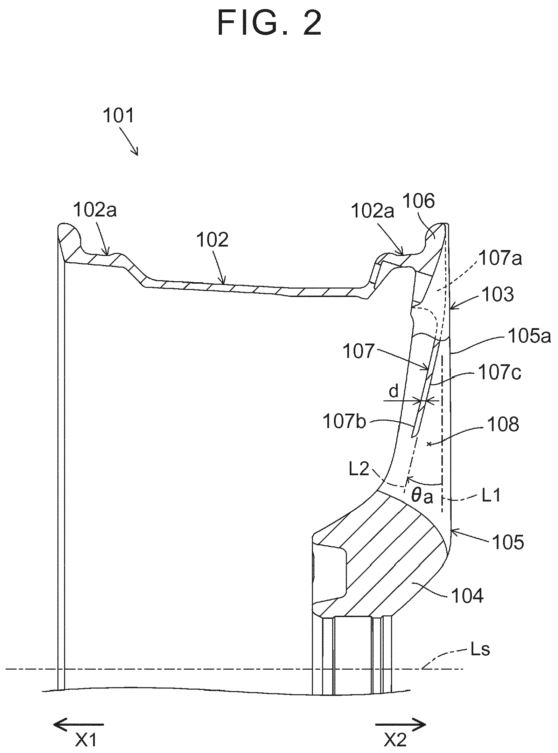

Hereinafter, a vehicle wheel (hereinafter, may be simply referred to as "wheel") according to an embodiment of the invention will be described in detail with reference to the drawings. In FIG. 2, an arrow X1 indicates a vehicle inner side, and an arrow X2 indicates a vehicle outer side in a rim axis direction of a wheel rim portion constituting a part of the wheel.

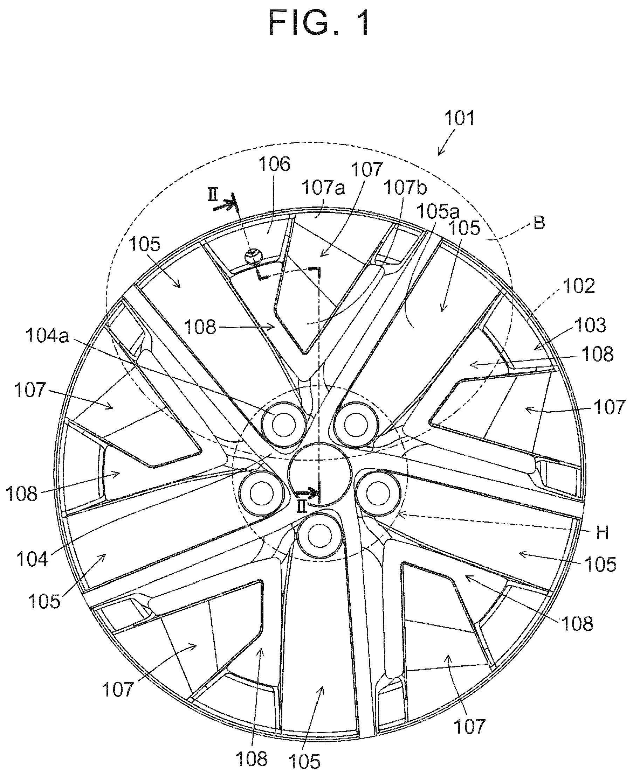

As shown in FIG. 1, a wheel 101 is a vehicle wheel (i.e., a wheel for a vehicle such as an automobile) to which an annular tire (not shown) is attached. The wheel 101 includes a wheel rim portion (hereinafter, may be simply referred to as "rim portion") 102 and a wheel disc portion (hereinafter, may be simply referred to as "disc portion") 103. The rim portion 102 has a cylindrical shape. The disc portion 103 has a disc shape and is integrally joined to a cylindrical end portion of the rim portion 102 on the vehicle outer side. The rim portion 102 includes a bead seat (i.e., a bead seat 102a in FIG. 2) that holds a tire. The rim portion 102 may be regarded as "wheel rim portion" of the invention. The disc portion 103 further includes a hub portion 104, a plurality of (five in the embodiment) spoke portions 105, and a plurality of (five in the embodiment) extending portions 107. The wheel 101 is a cast aluminum wheel with one piece structure that is formed by a casting process using aluminum alloy as a main material, and thus, the rim portion 102 and the disc portion 103 are formed integrally with each other.

The hub portion 104 is provided at a center region (i.e., a region at and around a center) of the disc portion 103, and the hub portion 104 is attached to an axle hub H of a vehicle. The hub portion 104 is provided with a plurality of (five in the embodiment) bolt holes 104a through each of which a corresponding one of a plurality of fastening bolts (not shown) on the axle hub H-side is inserted. The hub portion 104 may be regarded as "hub portion" of the invention.

The spoke portions 105 extend radially from the hub portion 104 to the rim portion 102 in a wheel radial direction of the wheel 101, and are connected to the hub portion 104 and the rim portion 102. The spoke portions 105 are disposed at equal intervals in a circumferential direction of the disc portion 103. A plurality of opening portions 108 is provided such that each of the opening portions 108 is disposed between two of the spoke portions 105 that are adjacent to each other, and the number of the opening portions 108 is the same as the number of the spoke portions 105. The opening portions 108 are required to ensure brake cooling performance. The spoke portions 105 may be regarded as "spoke portions" of the invention, and the opening portion 108 may be regarded as "opening portion" of the invention.

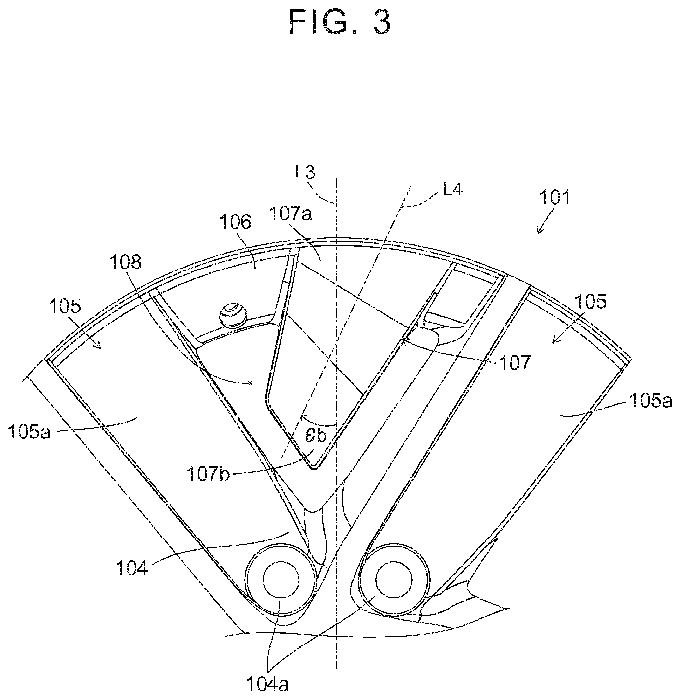

Each of the extending portions 107 is integrally connected to the rim portion 102 in a state in which the extending portion 107 is connected to a collar-shaped flange portion 106 on the side of the rim portion 102. Each of the extending portions 107 extends from a base end region 107a on the side of the rim portion 102 to a distal end region 107b without contacting any of the hub portion 104 and the spoke portions 105. Further, as shown in FIG. 2, each of the extending portions 107 is configured to extend on an inclined line L2 that is inclined from a reference vertical line L1 toward the vehicle inner side X1 by an inclination angle θa with respect to a plate thickness direction of the extending portion 107. Thus, each of the extending portions 107 has a shape that is gradually inclined toward the vehicle inner side X1 in a direction toward the hub portion 104. In other words, each of the extending portions 107 is inclined from the vertical line L1 toward the vehicle inner side X1 in a direction from the rim portion 102 toward the hub portion 104. Further, as shown in FIG. 3, each of the extending portions 107 is configured to extend on an inclined line L4 that is inclined from a reference wheel radial line L3 in a clockwise direction by an inclination angle θb, with respect to the plate thickness direction of the extending portion 107. Each of the extending portions 107 is in the form of a plate piece (a fin), and the plate thickness direction of the extending portion 107 is the rim axis direction of the rim portion 102. In addition, each of the extending portions 107 has a twisted structure, that is, each of the extending portions 107 is twisted in a direction from the base end region 107a on the side of the rim portion 102 toward the distal end region 107b on the side of the hub portion 104. The shape and structure of each of the extending portions 107 in the embodiment are examples of the shape and structure that make it possible to achieve desired aerodynamic characteristics of the vehicle and desired brake cooling performance. One extending portion 107 is allocated to each of all the opening portions 108. Thus, each of the extending portions 107 partially covers the corresponding opening portion 108. The extending portion 107 may be regarded as "extending portion" of the invention. All of the extending portions 107 are configured to have the same size.

Each of the extending portions 107 configured as described above partially restricts a flow of air toward the vehicle inner side X1 or the vehicle outer side X2 through the corresponding opening portion 108. In addition, each of the extending portions 107 adjusts a flow of air on a surface of the extending portion 107. Thus, the aerodynamic characteristics of the vehicle can be improved. Further, since each of the extending portions 107 is not connected to any of the hub portion 104 and the spoke portions 105, even if a load is applied to the wheel 101 when the vehicle is traveling, the load is unlikely to be applied to the extending portions 107. Accordingly, it is possible to increase flexibility in design of the shape (plate thickness, orientation, size, and the like) of each of the extending portions 107. As a result, the weight of each of the extending portions 107 can be reduced by reducing the plate thickness of the extending portion 107. This makes it possible to suppress an increase in the weight of the wheel 101. As shown in FIG. 2, a thickness "d" of each of the extending portions 107 in a rim axis direction (i.e., a cylindrical axis direction) Ls can be made smaller than a thickness of each of the spoke portions 105 in the rim axis direction. Thus, the thickness "d" of each of the extending portions 107 can be reduced to the minimum thickness (for example, approximately 5 mm) at which casting quality can be ensured.

Since each of the extending portions 107 is not connected to any of the spoke portions 105 and the rim portion 102, and therefore the flexibility in the design of the shape of the extending portion 107 is increased, the extending portion 107 can be configured to have the twisted structure as described above. Thus, each of the extending portions 107 can be easily configured to have any of various shapes, for example, a shape that makes it possible to achieve desired aerodynamic characteristics and desired brake cooling performance.

In each of the extending portions 107, a vehicle outer side surface 107c is positioned on the vehicle inner side with respect to a vehicle outer side surface 105a of each of the spoke portions 105 (i.e., the vehicle outer side surface 107c of the extending portion 107 is positioned inside the vehicle outer side surface 105a of the spoke portion 105). In other words, each of the extending portions 107 extends toward the hub portion 104 without protruding beyond the vehicle outer side surface 105a of each of the spoke portions 105 in the rim axis direction (i.e., the cylindrical axis direction) of the rim portion 102. Thus, it is possible to suppress contact (i.e., to reduce the possibility of contact) between each of the extending portions 107 of the wheel 101 and an obstacle positioned outside the wheel 101 (for example, a curb provided at a road shoulder as a boundary line between a roadway and a sidewalk or a safety zone).

The invention is not limited to the above-described typical embodiment. The invention may be applied in various manners and various modifications may be made to the above-described embodiment without departing from the scope of the invention. For example, the invention may be implemented in each of embodiments described below in which modifications are made to the above-described embodiment.

In the above-described embodiment, each of the extending portions 107 extends toward the hub portion 104 without protruding beyond the vehicle outer side surface 105a of each of the spoke portions 105 in the rim axis direction (i.e., the cylindrical axis direction) of the rim portion 102. However, in the invention, it is possible to employ a structure in which the vehicle outer side surface 107c of each of the extending portions 107 is flush with the vehicle outer side surface 105a of each of the spoke portions 105, as one of structures in which each of the extending portions 107 does not protrude beyond the vehicle outer side surface 105a of each of the spoke portions 105.

In the above-described embodiment, the extending portions 107 are respectively provided in all the opening portions 108 each of which is provided between the adjacent spoke portions 105 of the wheel 101, that is, the number of the extending portions 107 is the same as the number of the opening portions 108. However, in the invention, one or more portions each of which is equivalent to the extending portion may be provided in only a part of the opening portions. In this case, the number of the extending portions is different from the number of the opening portions. In the invention, one or more extending portions may be used depending on the necessity.

In the above-described embodiment, all the extending portions 107 have the same size. However, it is possible to employ a structure in which a size of the extending portion allocated to a given opening portion is different from a size of the extending portion allocated to another opening portion.

In the above-described embodiment, the wheel 101 is a cast aluminum wheel formed using aluminum alloy as a main material. However, in the invention, the wheel 101 may be formed using, as a main material, any of various materials other than aluminum alloy, for example, light alloy such as magnesium alloy and titanium alloy, and carbon fiber-reinforced resin (carbon resin). Further, in the invention, as a method for manufacturing the wheel 101, a forging manufacturing method may be employed, instead of the casting manufacturing method.

## Claims

1. A vehicle wheel (101) **characterized by** comprising:
a wheel rim portion (102) having a cylindrical shape;
a hub portion (104) configured to be attached to an axle hub of a vehicle;
a plurality of spoke portions (105) extending radially from the hub portion (104) to the wheel rim portion (102) and connected to the wheel rim portion (102); and
one or more extending portions (107) each of which is configured to partially cover an opening portion provided between two adjacent spoke portions (105) among the plurality of spoke portions (105), and to extend from the wheel rim portion (102) toward the hub portion (104) without contacting any of the hub portion (104) and the plurality of spoke portions (105), the one or more extending portions (107) having a thickness that is smaller than a thickness of each of the plurality of spoke portions (105) in a cylindrical axis direction of the wheel rim portion (102).

2. The vehicle wheel (101) according to claim 1, wherein each of the one or more extending portions (107) extends from the wheel rim portion (102) toward the hub portion (104) without protruding beyond a vehicle outer side surface (105a) of each of the plurality of spoke portions (105) in the cylindrical axis direction.

3. The vehicle wheel (101) according to claim 1 or 2, wherein each of the one or more extending portions (107) is inclined from a vertical line toward a vehicle inner side in a direction from the wheel rim portion (102) toward the hub portion (104).
